# EUROPEAN PATENT SPECIFICATION

(11) **EP 3 397 528 B1**
(45) Date of publication and mention of the grant of the patent: **05.02.2020**
(21) Application number: 16829243.1
(22) Date of filing: 22.12.2016
(51) Int. Cl.: B60S 3/04

(54) **APPARATUS SUITABLE FOR CLEANING VEHICLES**
ZUR REINIGUNG VON FAHRZEUGEN GEEIGNETE VORRICHTUNG
APPAREIL CONÇU POUR NETTOYER DES VÉHICULES

(30) Priority: 28.12.2015 IT UB20150932; 28.12.2015 IT UB20159157
(43) Date of publication of application: 07.11.2018
(73) Proprietor: Best Wash Bike S.r.l., 20161 Milan (IT)
(72) Inventor: TOLDA, Paolo, 20161 Milano (IT)
(74) Representative: Mittler, Andrea
(86) International application number: PCT/EP2016/082497
(87) International publication number: WO 2017/114767

(56) References cited:
- EP-A2- 2 006 175
- DE-A1- 4 402 611
- US-A1- 2009 217 955
- US-A1- 2013 098 403

## Description

The present invention relates to an apparatus suitable for cleaning vehicles, in particular for two- or three-wheel vehicles, for example motorcycles or bicycles, but also for lightweight, four-wheel vehicles, for example quads. Document EP 2 006 175 A2 is considered to be the prior art closest to the subject-matter of claim 1.

Containment structures for cleaning motorcycles or bicycles are known from the prior art. Said containment structures are closed to avoid the dispersion of the wash liquid into the environment.

The structures comprise a support base for the motorcycle or bicycle and side walls provided with washing nozzles for discharging jets of wash liquid, which allow the motorcycle or bicycle to be washed.

The washing of the motorcycle or bicycle occurs automatically with a preset sequence of steps; the sequence may comprise washing, rinsing and/or waxing steps.

The aforesaid washing apparatuses have certain drawbacks, in particular in the distribution of the wash liquid.

The arrangement of the washing nozzles in the side walls of the containment structures does not allow an effective washing of the below part of the vehicle or underbody.

Moreover, the jets of wash liquid from the washing nozzles extend along rectilinear trajectories; thereby, the washing nozzles distribute the wash liquid in specific zones of the containment structure so as to distribute the wash liquid in a non-homogenous manner over the surface of the motorcycle or bicycle to be washed. In view of the prior art, it is the object of the present invention to provide an apparatus suitable for cleaning vehicles which performs an improved washing of the vehicle as compared to the known ones.

According to the present invention, such an object is achieved by means of an apparatus suitable for cleaning vehicles as defined in claim 1.

According to the invention, the apparatus suitable for cleaning vehicles comprises:
- a base structure for positioning the vehicle,
- a containment structure of the vehicle which is associated with the base structure, the containment structure comprising at least two side walls opposite to the side surfaces of the vehicle once the vehicle is placed on the base structure,
- at least one plurality of washing nozzles supported by the side walls of the containment structure and suitable for distributing washing liquid onto the vehicle, and movement means for moving the wash nozzles of said plurality of washing nozzles, said movement means being suitable for moving said washing nozzles according to an oscillating movement with respect to the containment structure of the vehicle, said movement means are suitable for rotating said plurality of washing nozzles around a longitudinal axis so that said plurality of washing nozzles oscillates between a first position at a first height from the base structure and a second position at a second height from the base structure, wherein said first height is lower than said second height, wherein said plurality of washing nozzles comprises a first plurality of washing nozzles supported by one of the side walls of the containment structure and a second plurality of washing nozzles supported by the other of the side walls of the containment structure, characterised in that said movement means are suitable for asynchronously moving said first and second plurality during the cleaning of the vehicle.

Due to the oscillating movement of said other plurality of washing nozzles, the washing apparatus according to the present invention allows a much more precise washing of the side walls of the vehicle.

The features and advantages of the present invention will become apparent from the following detailed description of a practical embodiment thereof, shown by way of non-limiting example in the accompanying drawings, in which:
figure 1 is a perspective view of the apparatus suitable for cleaning vehicles according to one embodiment of the present invention;
figure 2 is a diagrammatic perspective view of the apparatus in figure 1;
figure 3 is a diagrammatic perspective view of a part of the apparatus in figure 1;
figure 4 is a side view of a part of the washing apparatus in figure 3;
figure 5 is a diagrammatic perspective view of the part of the apparatus in figure 3;
figure 6 is a diagrammatic perspective view of a side wall of the apparatus in figure 1;
figure 7 is a diagrammatic view of the side wall in figure 6;
figure 8 is a top view of the side wall in figure 7;
figure 9 is a front view of the side wall in figure 7;
figure 10 is a perspective view of a plurality of washing nozzles of the apparatus in figure 1;
figure 11 is a front view of the plurality of washing nozzles in figure 10;
figure 12 is a diagrammatic perspective view of the apparatus in figure 1, with the pluralities of washing nozzles associated with the side walls;
figure 13 is a front view of the washing apparatus in figure 12;
figure 14 is a diagrammatic view of cleaning devices of the apparatus in figure 1;
figure 15 is a perspective view of the cleaning devices in figure 14;
figure 16 is a diagrammatic view of the side wall of the apparatus suitable for cleaning vehicles according to a variant of the embodiment of the present invention;
figure 17 is a top view of the side wall in figure 16;
figure 18 is a front view of the side wall in figure 16.

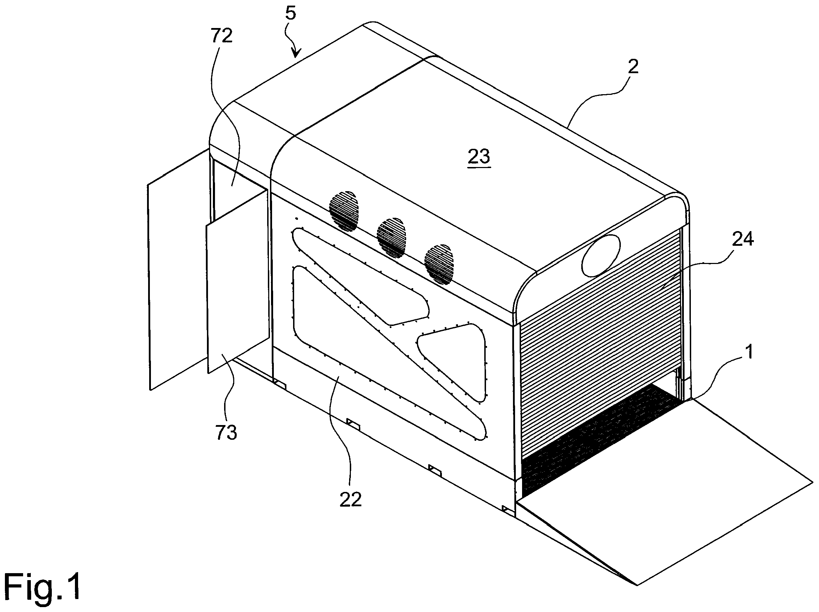

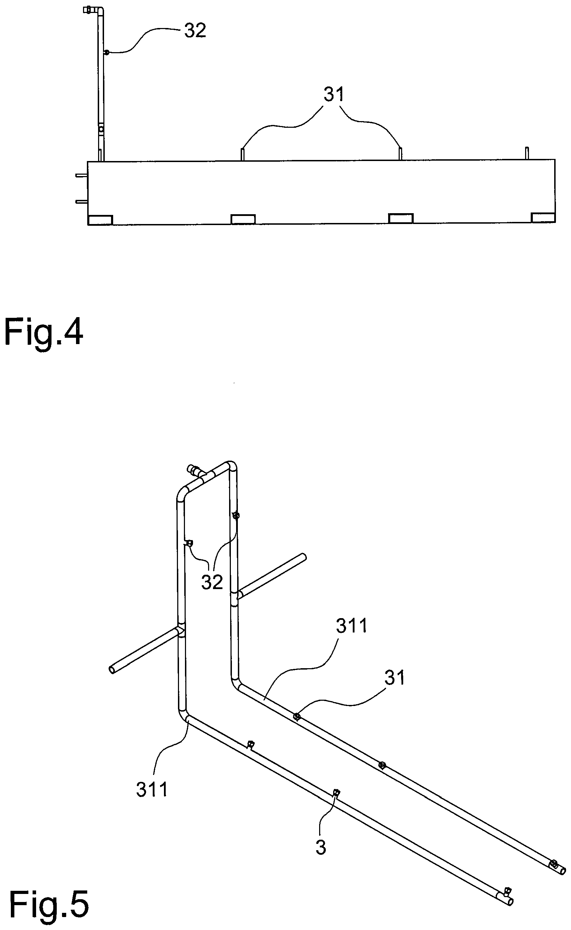

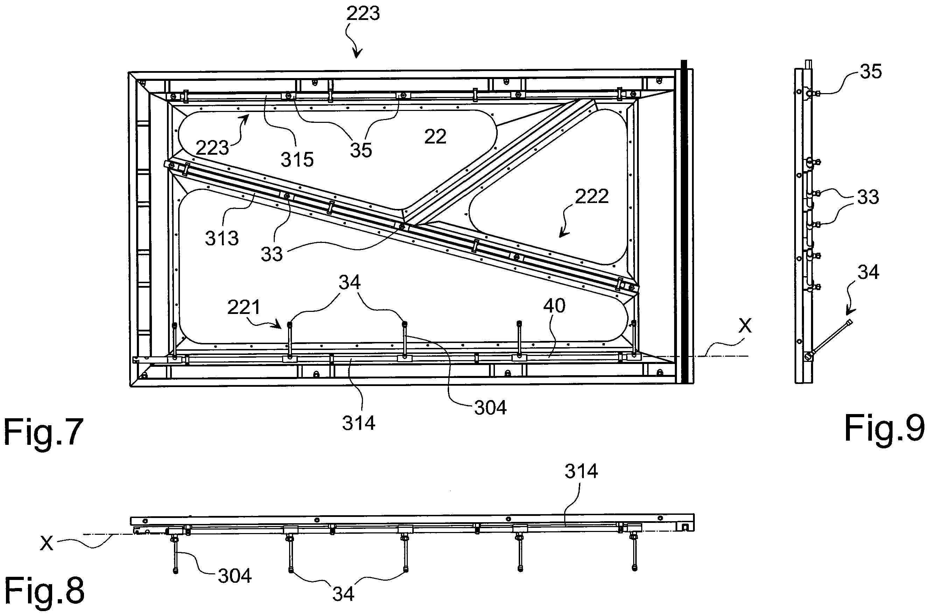

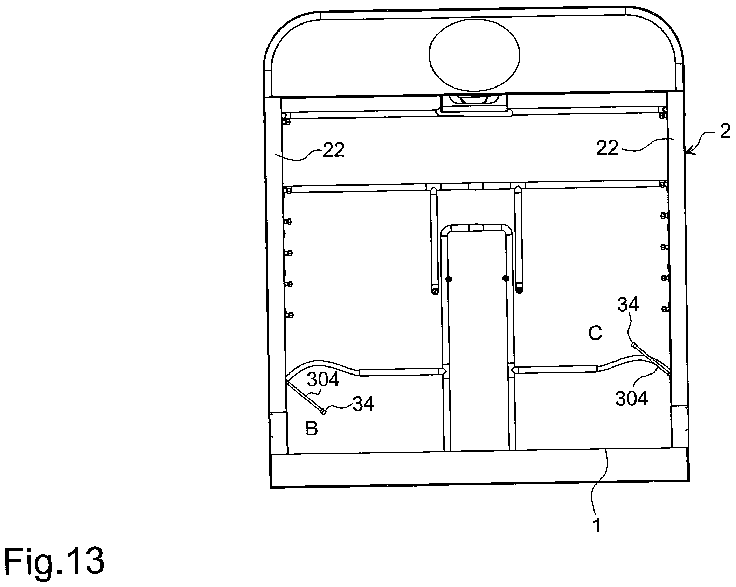

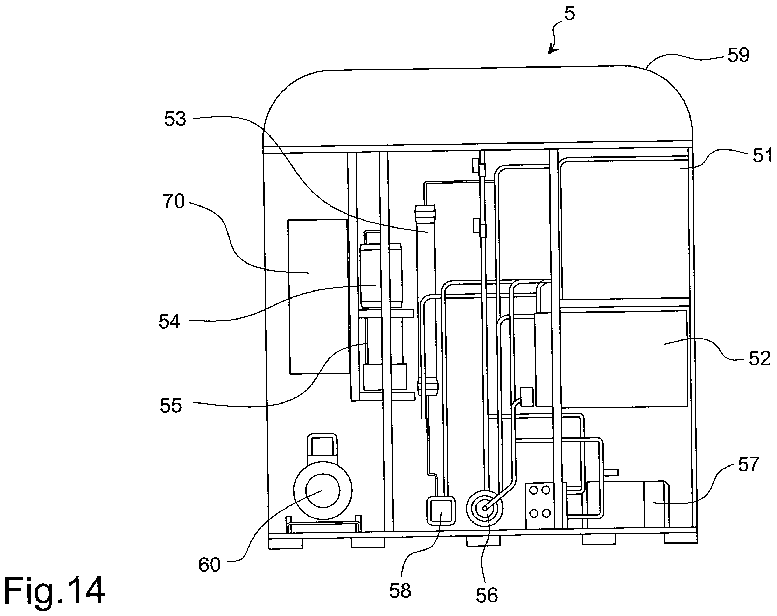

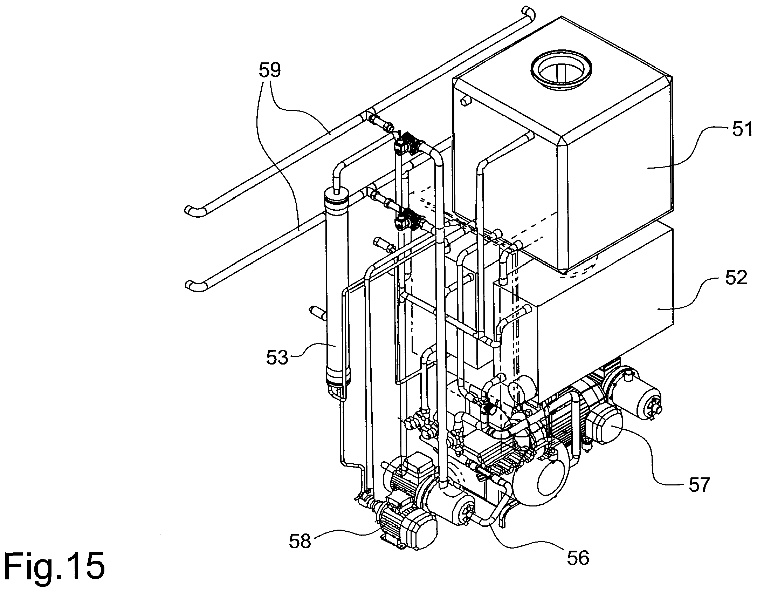

Figures 1 to 15 show an apparatus suitable for cleaning or washing vehicles according to one embodiment of the present invention. Vehicle means a two-wheel or three-wheel vehicle, with or without an engine, such as for example a motorcycle or a bicycle or tricycle; the term "vehicle" also means a lightweight four-wheel vehicle, such as for example a quad.

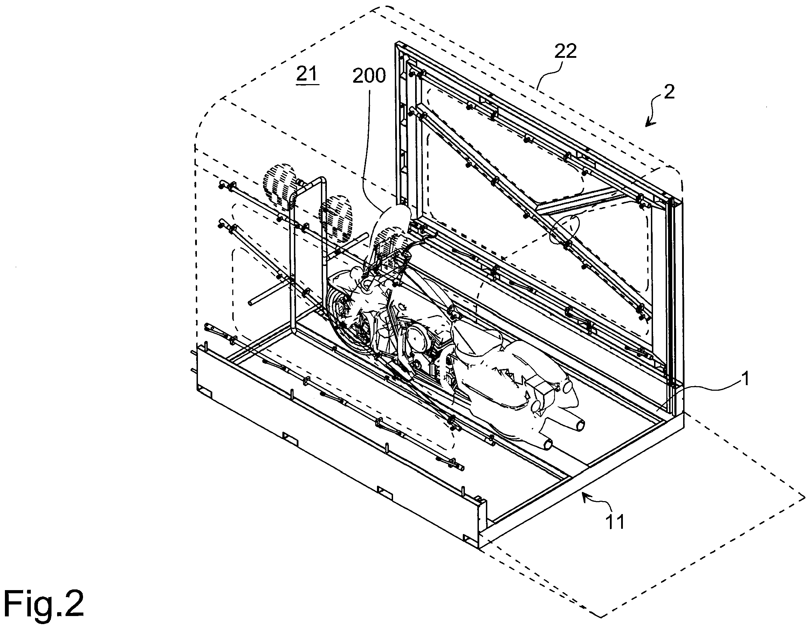

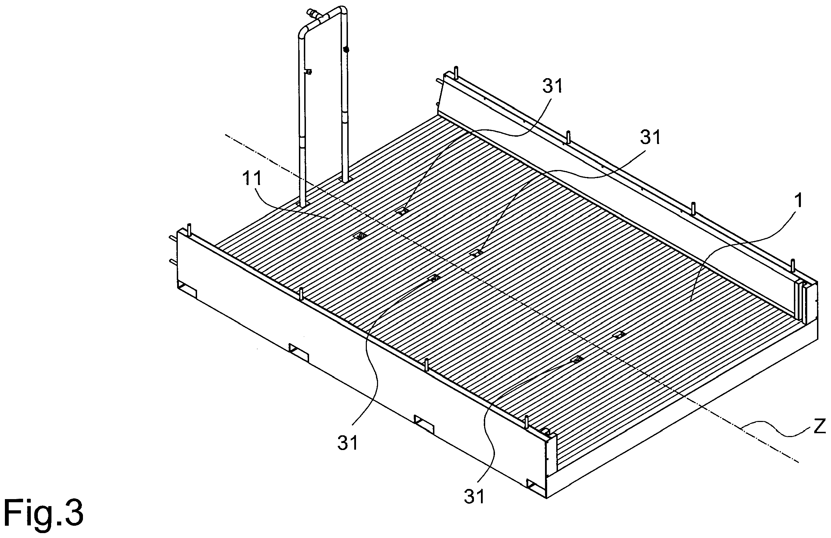

The washing apparatus comprises a base structure 1 on which vehicle 200 is arranged for the cleaning (figure 2). The base structure 1 comprises a middle area 11 on which the vehicle is arranged for the cleaning. The base structure 1 preferably is a platform which is drilled in the middle part 11 to drain wash residues towards a tank for containing the wash residues (figure 3).

The washing apparatus comprises a containment structure 2 of the vehicle, which is associated with the base structure 1 and is adapted to define a cleaning chamber for the vehicle (figures 1 and 2). The containment structure 2 comprises at least one rear wall 21 opposite to the front part of the vehicle once the vehicle has been placed on the base structure 1, two side walls 22 opposite to each other, opposite to or facing onto the side parts of the vehicle and positioned along the side parts of the vehicle once the vehicle has been arranged on the base structure, a top 23 opposite to the base structure 1, a gate 24 arranged in the front part of the containment structure for the entry of the vehicle to be cleaned into the cleaning chamber or for the exit of the washed vehicle.

The washing apparatus comprises various pluralities of washing nozzles arranged in the containment structure 2 and in the base structure 1.

A first plurality 31 of washing nozzles, preferably six, is arranged in the middle area 11 of the base structure 1 for cleaning the below part of the vehicle or underbody (figures 3 to 5). The plurality 31 of washing nozzles is preferably arranged parallel to a longitudinal axis Z which is parallel to the longitudinal axis of the vehicle to be washed. The washing nozzles of the plurality 31 of washing nozzles are preferably aligned below the underbody of the vehicle to be cleaned once the vehicle has been positioned on the base structure 1, so as to introduce wash liquid onto the underbody. The washing nozzles of the plurality 31 of washing nozzles are preferably arranged aligned below the underbody of the vehicle to be cleaned so as not to be outside the projection of the profile of the vehicle to be cleaned on the base structure 1.

The plurality 31 of washing nozzles (best shown in figures 3 to 5) is suitable for emitting wash liquid at high pressure, where high pressure means a pressure which is higher than or equal to 15 bar. The washing nozzles are suitable for emitting high pressure wash liquid preferably during the washing steps of the vehicle, while during the rinsing operation they normally emit low pressure wash liquid, preferably between 3 and 8 bar; however, the plurality 31 of washing nozzles is suitable for emitting low pressure wash liquid also during certain washing steps of the vehicle. The plurality 31 of washing nozzles is preferably arranged over two rows and is connected to respective pipes 311 arranged in parallel and each having the same number of washing nozzles.

The plurality of washing nozzles 31 allows a precise cleaning of the underbody of the vehicle since once the vehicle has been arranged inside the washing apparatus, the plurality of washing nozzles 31 is below the vehicle. The precise cleaning of the underbody allows the majority of the debris, mud or other which is deposited on the bottom of the vehicle, to be removed. Moreover, the washing at high pressure contributes to improving the cleaning of the underbody because it allows an improved removal of the mud or other material.

A second plurality 32 of washing nozzles is arranged in the rear wall 21 for cleaning the front part of the vehicle. The plurality 32 of washing nozzles is suitable for emitting wash liquid at high pressure, where high pressure means a pressure which is higher than or equal to 15 bar.

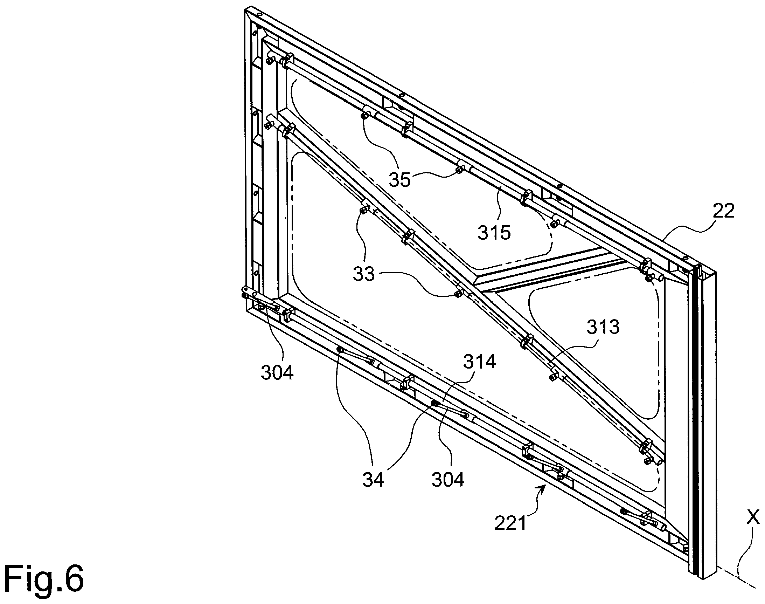

Three other pairs of pluralities of washing nozzles 33-35 (best shown in figures 6 to 9) are arranged in the side walls 22 of the containment structure 2; the pairs of pluralities of washing nozzles 33-35 allow the cleaning of the side walls and of the top part of the vehicle.

The pair of plurality of washing nozzles 34 is arranged in the lower part 221 of the side walls 22 and longitudinally extends preferably for the whole length of each side wall 22; each washing nozzle of the pluralities of washing nozzles 34 is carried by an arm 304 consisting of a tube which is adapted to connect each washing nozzle with a pair of pipes 314 which longitudinally extend for the whole length of each side wall 22. The pluralities of washing nozzles 34 of the pair of plurality of washing nozzles 34 are preferably arranged parallel to one another. Preferably, the pluralities of washing nozzles 34 of the pair of plurality of washing nozzles 34 are suitable for emitting high pressure wash liquid, that is with a pressure which is greater than or equal to 15 bar, but preferably around 30 bar, or low pressure wash liquid, between 3 and 8 bar.

The pair of plurality of washing nozzles 33 is arranged in the central part 222 of the side walls 22 and diagonally extends on each side wall 22; each washing nozzle of the pluralities of washing nozzles 33 is connected to a pair of pipes 313 which diagonally extend for the whole length of each side wall 22 and which also provide to support the plurality of washing nozzles 33. The diagonal extension of the pluralities of washing nozzles 33 occurs so that the end of the diagonal which is the highest from the base structure 1 is adjacent to the rear wall 21, while the end of the diagonal which is the lowest from the base structure 1 is adjacent to gate 24; thereby, the pluralities of washing nozzles 33 follow the extension of the vehicle, especially in the case of a motorcycle, which has a higher front part than the rear part, thus ensuring a complete and efficient cleaning of the side parts of the entire vehicle. The pluralities of washing nozzles 33 of the pair of plurality of washing nozzles 33 are preferably arranged parallel to one another, and preferably the plurality of washing nozzles 33 of the pair of plurality of washing nozzles 33 are suitable for emitting low pressure wash liquid, between 3 and 8 bar.

The pair of plurality of washing nozzles 35 is arranged in the top part 223 of the side walls 22 and longitudinally extends preferably for the whole length of each side wall 22; each washing nozzle of the pluralities of washing nozzles 35 is connected to a pair of pipes 315 which longitudinally extend for the whole length of each side wall 22 and which also provide to support the plurality of washing nozzles 35. The pluralities of washing nozzles 35 of the pair of plurality of washing nozzles 35 are preferably arranged parallel to one another, and preferably the pluralities of washing nozzles 35 of the pair of plurality of washing nozzles 35 are suitable for emitting low pressure wash liquid, between 3 and 8 bar.

The washing nozzles of the pair of pluralities 33, 35 are fixed, while the pair of pluralities of washing nozzles 34 is oscillating with respect to the containment structure 2 of the vehicle; in particular, each plurality of washing nozzles of the pair of plurality of washing nozzles 34 oscillates about a longitudinal axis X which preferably is parallel to the base structure 2 and to the side walls 22 and is orthogonal to the rear wall 21 and preferably is parallel to the longitudinal axis of the vehicle to be washed. The washing apparatus comprises movement means 36 for each plurality of washing nozzles of the pair of plurality of washing nozzles 34, which are adapted to move the plurality of washing nozzles 34 according to an oscillating movement about axis X. In particular, the movement means 36 provide to move each pipe 314 of the pair of pipes 314 to obtain the oscillating movement of the pluralities of washing nozzles 34.

Each plurality of washing nozzles 34 is aligned along a direction parallel to a longitudinal axis of the vehicle to be washed; in particular, the direction in which the plurality of washing nozzles 34 is arranged preferably is horizontal.

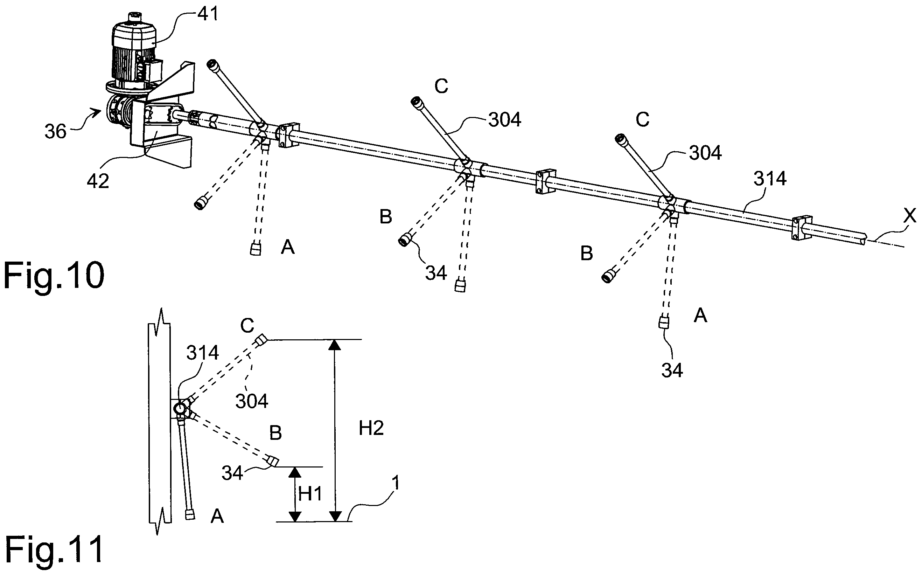

Each washing nozzle of the plurality of washing nozzles 34 is suitable for rotating about axis X, which preferably is horizontal, as shown in figures 10 and 11.

In a resting position, each washing nozzle of the plurality of washing nozzles 34 is arranged adjacent to the base structure 1.

In operating position, during the cleaning of the vehicle, each washing nozzle of the plurality of washing nozzles 34 rotates from a position B of minimum height HI (of for example, 100 mm) from the base structure 1 to a position C of maximum height H2 (of for example, 900 mm) from the base structure 1.

Each washing nozzle of the plurality of washing nozzles 34 is constrained to the pipe or tube 314 arranged along axis X and can be rotated about said axis X by means of the movement means 36 preferably comprising an electric motor 41 and a movement transmission device 42 of the chain and gear wheel type; however, other types of movement means 36 may be used, for example of the hydraulic piston type, etc.

During the cleaning of the vehicle, each washing nozzle of the plurality of washing nozzles 34 oscillates orthogonal to axis X between the operating positions B and C.

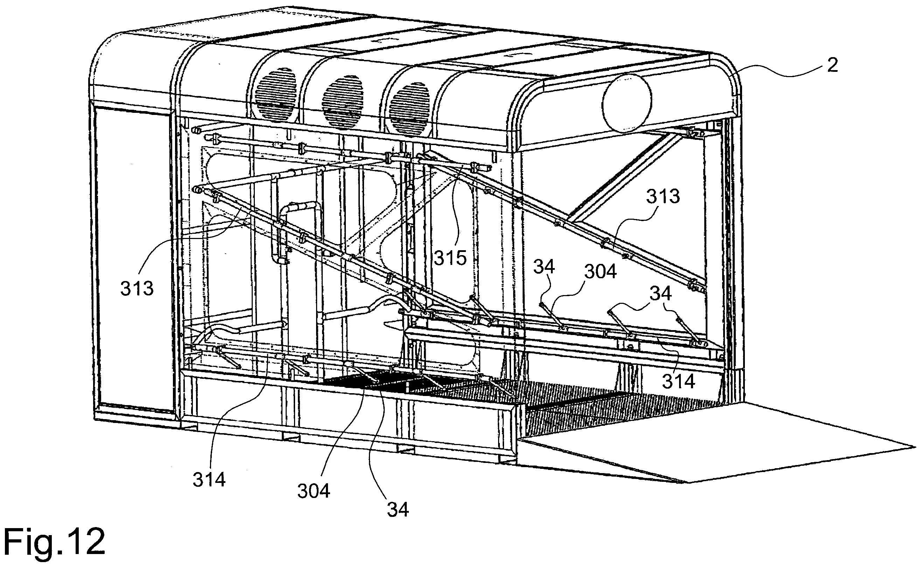

In particular, each plurality of washing nozzles 34 of the pair of plurality of washing nozzles 34 is moved asynchronously with respect to the other plurality of washing nozzles 34 during the cleaning of the vehicle (figures 12-13); that is, if the washing nozzles of a plurality of washing nozzles 34 associated with a side wall 22 are in the operating position B, the washing nozzles of the other plurality of washing nozzles 34 associated with the other side wall 22 are to be in the operating position C. Thereby, the wash water jets from the washing nozzles of a plurality of washing nozzles 34 do not interfere with the wash water jets from the other plurality of washing nozzles 34, thus obtaining an optimal removal of debris, mud or other from the vehicle, preferably in the low pressure steps of cleaning, washing or rinsing or waxing.

The washing apparatus comprises a rear part 5 adjacent to the rear wall 21 of the containment structure 2 and adapted to house the devices which are useful for the cleaning of the vehicle; thereby, a part is created which is adapted to house the cleaning devices, such as water tanks, detergent, detergent dispensers, pumps, compressors, which part is isolated from the cleaning chamber of the vehicle formed by the base structure 1 and the containment structure 2. In the rear part 5 there are tanks 51, 52 for cold and hot water, an osmotic water tank 53, a tank 54 for the detergent, devices 55 for dispensing the detergent, low pressure pump 56, (between 3 and 12 bar), high pressure pump 57 (preferably of the adjustable type between 15 and 100 bar) and osmotic pump 58 connected, by means of pipes 59, to the pipes 311, 313-315 and to the plurality of washing nozzles 31-35 in order to emit the wash liquid, simple hot or ambient temperature water, or the osmotic water into the washing nozzles. The pluralities of washing nozzles 31-35 may receive both the high pressure wash liquid from pump 57, preferably for the cleaning operation of the vehicle, and the low pressure wash liquid from pump 56. In the rear part 5, there are also a compressor 60 and an electric panel 70 which also comprises a control panel 71 of the various medium or high pressure cleaning operations, medium or high pressure rinsing and/or drying operations.

The pipes 311 are provided with suitable solenoid valves controlled by means of the control panel 71 so that only certain pluralities of washing nozzles are activated simultaneously, for example the pluralities of washing nozzles 34 belonging to a wash wall are alternately activated with respect to the pluralities of washing nozzles 34 belonging to the other wash wall when a washing step at high pressure is actuated; this is to optimize the cleaning of the vehicle since the wash water jets are alternately introduced onto the vehicle first by the washing nozzles belonging to one of the walls 22 and then by the other of the walls 22.

The pluralities of washing nozzles 34 belonging to one of the wash walls 22 are preferably activated when the plurality of washing nozzles 31, 32 are not active if a washing or rinsing step is actuated at high pressure.

Preferably, the plurality of washing nozzles 32 is activated individually, that is when the other pluralities of washing nozzles 31, 34 are not active, when a washing or rinsing step at high pressure is actuated.

Preferably, also the plurality of washing nozzles 31 is activated individually, that is when the other pluralities of washing nozzles 32, 34 are not active, when a washing or rinsing step at high pressure is actuated.

The control panel 71 preferably comprises processing means and a memory in which a software is stored according to which the solenoid valves of the pipes 311 are closed or opened to cause both the various high and low pressure cleaning steps of the vehicle, the pluralities of washing nozzles 31-35 which are to be activated in said cleaning steps and the time period of activation of the nozzles.

The control panel 71 is easily accessible from a side access 72 which can be closed by a door 73.

The washing apparatus according to the present invention preferably comprises a drying apparatus 200 of the vehicle arranged in the top wall 23 of the containment structure 2. The drying apparatus comprises devices 201 adapted to introduce a flow of drying air onto the vehicle after the cleaning thereof.

Normally, the cleaning of the vehicle occurs automatically and therefore preset sequences are provided of washing and rinsing steps the vehicle with or without drying and with or without releasing wax onto the vehicle.

One sequence of operating cleaning steps performed automatically by the washing apparatus provides:
- a low pressure rinsing step with hot water (about 40°) to eliminate traces of smog;
- a low or high pressure washing step with wash liquid (hot water and detergent) to release the detergent onto the vehicle and allow the reaction thereof;
- a rinsing step with hot water (about 40°) at low pressure or at high pressure;
- a step of releasing wax onto the vehicle;
- a low pressure rinsing step with osmotic water;
- a drying step.

The time periods of duration of each step depend on the type of washing sequence selected by the user, short, quick or intense; the "short" washing sequence provides rinsing steps with low pressure hot water while the other two washing sequences (quick and intense) provide the second rinsing step with high pressure water and differ only in the duration of the rinsing step at high pressure. Preferably, the rinsing step at high pressure provides activating the pluralities of washing nozzles 31, 32, 34 in sequence; in a first moment, the control panel 71 activates the plurality of washing nozzles 32 alone for rinsing the front part of the vehicle, then the plurality of washing nozzles 32 is deactivated and the plurality of washing nozzles 31 alone is activated for rinsing the lower part of the vehicle, then the plurality of washing nozzles 31 is deactivated and the plurality of washing nozzles 34 alone of the pair of washing nozzles 34 belonging to one of the walls 22 for rinsing a side part of the vehicle is activated, then said plurality of washing nozzles 34 is deactivated and the plurality of washing nozzles 34 belonging to the other walls 22 for rinsing the other side part of the vehicle is activated. The cleaning sequences may be varied and customized by acting on the control panel 71.

Once a cleaning sequence of a vehicle has been controlled, gate 24 automatically closes.

All the cleaning and drying steps may also be monitored by means of an external monitor. An emergency button (not shown in the drawings) is arranged on the control panel 71, which allows the cleaning sequence of the vehicle to be stopped at any time; moreover, in addition to stopping the washing sequence, the action on the emergency button also opens gate 24.

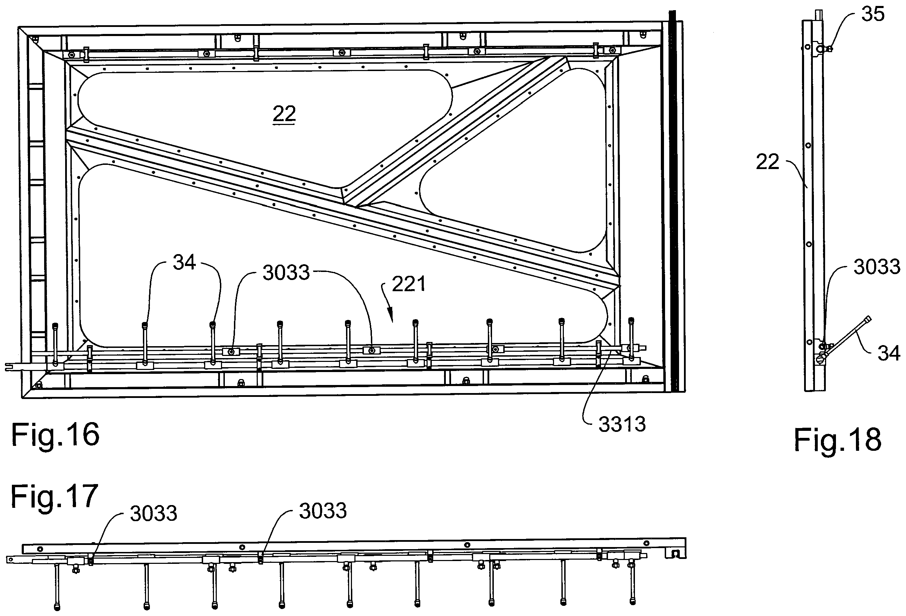

Figure 16-18 show the side wall of an apparatus suitable for cleaning vehicles according to a variant of the embodiment of the present invention. The only difference with the apparatus shown in Figures 1-15 is the presence of a pair of plurality of washing nozzles 3033 in the place of the pair of plurality of washing nozzles 33. The pair of plurality of washing nozzles 3033 is arranged near the pair of pluralities of washing nozzles 34 in the lower part 221 of the side walls 22 so that each washing nozzle 3033 is comprises between two washing nozzles 34; each washing nozzle of the pluralities of washing nozzles 3033 is connected to a pair of pipes 3313 which extend for the whole length of each side wall 22 and which also provide to support the plurality of washing nozzles 3033. The pluralities of washing nozzles 3033 of the pair of plurality of washing nozzles 3033 are preferably arranged parallel to one another, and preferably the plurality of washing nozzles 3033 of the pair of plurality of washing nozzles 3033 are suitable for emitting low pressure wash liquid, between 3 and 8 bar.

The pair of pipes 3033 are connected with the pumps 56, 57 and 58 in the place of the pair of pipes 313 in the same manner as the pair of pipes 313.

## Claims

1. Apparatus suitable for cleaning vehicles comprising:
- a base structure (1) for positioning the vehicle,
- a containment structure (2) of the vehicle which is associated with the base structure, the containment structure comprising at least two side walls (22) opposite to the side surfaces of the vehicle once the vehicle is placed on the base structure,
- at least one plurality of washing nozzles (34) supported by the side walls of the containment structure and suitable for distributing washing liquid onto the vehicle, and movement means (36) for moving the wash nozzles of said plurality of washing nozzles, said movement means being suitable for moving said washing nozzles according to an oscillating movement with respect to the containment structure of the vehicle, said movement means are suitable for rotating said plurality of washing nozzles around a longitudinal axis (X) so that said plurality of washing nozzles oscillates between a first position (B) at a first height (H1) from the base structure and a second position (C) at a second height (H2) from the base structure, wherein said first height is lower than said second height, wherein said plurality of washing nozzles (34) comprises a first plurality of washing nozzles supported by one of the side walls of the containment structure and a second plurality of washing nozzles supported by the other of the side walls of the containment structure, **characterised in that** said movement means are suitable for asynchronously moving said first and second plurality during the cleaning of the vehicle.

2. Apparatus according to claim 1, **characterized by** comprising means (51-55, 57) suitable for providing said plurality of washing nozzles (34) with wash liquid at high pressure so that said plurality of washing nozzles is suitable for distributing high pressure wash liquid onto the vehicle.

3. Apparatus according to claim 2, **characterized in that** said means (51-55,57) are suitable for providing with washing liquid at a pressure higher than or equal to 15 bar.

4. Apparatus according to claim 1, **characterized by** comprising another plurality of washing nozzles (33), which is diagonally arranged on the side walls of the containment structure and is suitable for distributing washing liquid onto the vehicle

5. Apparatus according to claim 4, **characterized by** comprising a further plurality of washing nozzles (35), which is supported by the side walls of the containment structure and is suitable for distributing washing liquid onto the vehicle.

6. Apparatus according to claim 5, **characterized by** comprising means (51-55, 57) suitable for providing said another plurality of washing nozzles (33) and said further plurality of washing nozzles (35) with wash liquid at low pressure so that said another plurality of washing nozzles (33) and said further plurality of washing nozzles (35) are suitable for distributing low pressure wash liquid onto the vehicle.

7. Apparatus according to claim 6, **characterized in that** said plurality of washing nozzles (34), said another plurality of washing nozzles (33) and said further plurality of washing nozzles (35) are arranged in succession from bottom to the top on the side walls (22) of the containment structure of the vehicle.

8. Apparatus according to claim 1, **characterized in that** said movement means (36) are suitable for arranging said first plurality of washing nozzles in said first position (B) when said second plurality of washing nozzles is arranged in said second position (C) during the cleaning of the vehicle.

9. Apparatus according to claim 8, **characterized in that** said movement means (36) are suitable for arranging said plurality of washing nozzles in a third position (A) at an height from the base structure which is lower than said first height (H1) when the cleaning of the vehicle is finished.

10. Apparatus according to claim 1, **characterized by** comprising control means (71) suitable for activating said first plurality of washing nozzles and said second plurality of washing nozzles alternately when said first plurality of washing nozzles and said second plurality of washing nozzles are suitable for distributing washing liquid at high pressure.

## Patentansprüche

1. Vorrichtung, die zum Reinigen von Fahrzeugen geeignet ist, aufweisend:
- eine Basisstruktur (1) zum Positionieren des Fahrzeugs,
- eine Umschließungsstruktur (2) für das Fahrzeug, die der Basisstruktur des Fahrzeugs zugeordnet ist, wobei die Umschließungsstruktur mindestens zwei Seitenwände (22) gegenüber den Seitenflächen des Fahrzeugs umfasst, sobald das Fahrzeug an der Basisstruktur platziert ist,
- mindestens eine Vielzahl von Waschdüsen (34), die von den Seitenwänden der Umschließungsstruktur getragen werden und zur Verteilung der Waschflüssigkeit auf das Fahrzeug geeignet sind, und Bewegungsvorrichtungen (36) zum Bewegen von den Waschdüsen der Vielzahl von Waschdüsen, wobei die Bewegungsvorrichtungen dazu geeignet sind, die Waschdüsen gemäß einer oszillierenden Bewegung in Bezug auf die Umschließungsstruktur für das Fahrzeug zu bewegen, wobei die Bewegungsvorrichtungen dazu geeignet sind, die Vielzahl von Waschdüsen um eine Längsachse (X) zu drehen, so dass die Vielzahl von Waschdüsen zwischen einem ersten Position (B) auf einer ersten Höhe (H1) von der Basisstruktur und einer zweiten Position (C) auf einer zweiten Höhe (H2) von der Basisstruktur oszilliert, wobei die erste Höhe niedriger ist als die zweite Höhe,
wobei die Vielzahl von Waschdüsen (34) eine erste Vielzahl von Waschdüsen umfasst, die von einer der Seitenwände der Umschließungsstruktur getragen werden, und eine zweite Vielzahl von Waschdüsen, die durch die anderen der Seitenwände der Umschließungsstruktur getragen werden, **dadurch gekennzeichnet, dass** die Bewegungsvorrichtungen für asynchrones Bewegen der ersten und zweiten Vielzahl während der Reinigung des Fahrzeugs geeignet sind.

2. Vorrichtung gemäß Anspruch 1, **gekennzeichnet durch** das Aufweisen von Mitteln (51-55, 57), die zum Versorgen der Vielzahl von Waschdüsen (34) mit Waschflüssigkeit bei hohem Druck geeignet sind, so dass die Vielzahl von Waschdüsen geeignet ist, Hochdruck-Waschflüssigkeit auf das Fahrzeug zu verteilen.

3. Vorrichtung gemäß Anspruch 2, **dadurch gekennzeichnet, dass** die Mittel (51-55, 57) geeignet sind, Waschflüssigkeit bei einem Druck von gleich oder höher 15 bar bereitzustellen.

4. Vorrichtung gemäß Anspruch 1, **dadurch gekennzeichnet, dass** sie eine weitere Vielzahl von Waschdüsen (33) aufweist, die diagonal an den Seitenwänden der Umschließungsstruktur angeordnet sind und zum Verteilen von Waschflüssigkeit auf das Fahrzeug geeignet sind.

5. Vorrichtung gemäß Anspruch 4, **dadurch gekennzeichnet, dass** sie eine weitere Vielzahl von Waschdüsen (35) aufweist, die von den Seitenwänden der Umschließungsstruktur getragen werden und zum Verteilen von Waschflüssigkeit auf das Fahrzeug geeignet sind.

6. Vorrichtung gemäß Anspruch 5, **gekennzeichnet durch** das Aufweisen von Mitteln(51-55, 57), die zum Versorgen der anderen Vielzahl von Waschdüsen (33) und der weiteren Vielzahl von Waschdüsen (35) mit Waschflüssigkeit bei niedrigem Druck geeignet sind, so dass die andere Vielzahl von Waschdüsen (33) und die weitere Vielzahl von Waschdüsen (35) geeignet sind, Waschflüssigkeit mit niedrigem Druck auf das Fahrzeug zu verteilen.

7. Vorrichtung gemäß Anspruch 6, **dadurch gekennzeichnet, dass** die Vielzahl von Waschdüsen (34), die andere Vielzahl von Waschdüsen (33) und die weitere Vielzahl von Waschdüsen (35) nacheinander von unten nach oben an den Seitenwänden (22) der Umschließungsstruktur für das Fahrzeug angeordnet sind.

8. Vorrichtung gemäß Anspruch 1, **dadurch gekennzeichnet, dass** die Bewegungsvorrichtungen (36) geeignet sind, um die erste Vielzahl von Waschdüsen in der ersten Position (B) anzuordnen, wenn die zweite Vielzahl von Waschdüsen in der zweiten Position (C) während der Reinigung des Fahrzeugs angeordnet ist.

9. Vorrichtung gemäß Anspruch 8, **dadurch gekennzeichnet, dass** die Bewegungsvorrichtungen (36) geeignet sind, um die Vielzahl von Waschdüsen in einer dritten Position (A) in einer Höhe von der Basisstruktur, die niedriger ist als die erste Höhe (H1), anzuordnen, wenn die Reinigung des Fahrzeugs beendet ist.

10. Vorrichtung gemäß Anspruch 1, **dadurch gekennzeichnet, dass** sie Steuermittel (71) umfasst, die zum abwechselnden Aktivieren der ersten Vielzahl von Waschdüsen und der zweite Vielzahl von Waschdüsen geeignet sind, wenn die erste Vielzahl von Waschdüsen und die zweite Vielzahl von Waschdüsen zum Verteilen von Waschflüssigkeit bei hohem Druck geeignet sind.

## Revendications

1. Appareil conçu pour nettoyer des véhicules, comprenant :
- une structure de base (1) destinée à positionner le véhicule,
- une structure de confinement (2) du véhicule qui est associée à la structure de base, la structure de confinement comprenant au moins deux parois latérales (22) opposées aux surfaces latérales du véhicule une fois que le véhicule est placé sur la structure de base,
- au moins une pluralité de buses de lavage (34) supportées par les parois latérales de la structure de confinement et conçues pour distribuer un liquide de lavage sur le véhicule et des moyens de déplacement (36) pour déplacer les buses de lavage de ladite pluralité de buses de lavage, lesdits moyens de déplacement étant conçus pour déplacer lesdites buses de lavage en fonction d'un mouvement oscillant par rapport à la structure de confinement du véhicule, lesdits moyens de déplacement sont conçus de façon à entraîner en rotation ladite pluralité de buses de lavage autour d'un axe longitudinal (X), de telle sorte que ladite pluralité de buses de lavage oscille entre une première position (B) à une première hauteur (H1) à partir de la structure de base et une deuxième position (C) à une seconde hauteur (H2) à partir de la structure de base, dans lequel ladite première hauteur est inférieure à ladite seconde hauteur, dans lequel ladite pluralité de buses de lavage (34) comprend une première pluralité de buses de lavage supportée par l'une des parois latérales de la structure de confinement et une seconde pluralité de buses de lavage supportée par l'autre paroi des parois latérales de la structure de confinement, **caractérisé en ce que** lesdits moyens de déplacement sont conçus pour déplacer de manière asynchrone lesdites première et seconde pluralités pendant le nettoyage du véhicule.

2. Appareil selon la revendication 1, **caractérisé en ce qu'**il comprend des moyens (51-55, 57) conçus pour fournir à ladite pluralité de buses de lavage (34) un liquide de lavage à haute pression, de telle sorte que ladite pluralité de buses de lavage est conçue pour distribuer le liquide de lavage à haute pression sur le véhicule.

3. Appareil selon la revendication 2, **caractérisé en ce que** lesdits moyens (51-55, 57) sont conçus pour fournir un liquide de lavage à une pression supérieure ou égale à 15 bars.

4. Appareil selon la revendication 1, **caractérisé en ce qu'**il comprend une autre pluralité de buses de lavage (33), qui est agencée en diagonale sur les parois latérales de la structure de confinement et est conçue pour distribuer un liquide de lavage sur le véhicule.

5. Appareil selon la revendication 4, **caractérisé en ce qu'**il comprend une pluralité de buses de lavage supplémentaire (35), qui est supportée par les parois latérales de la structure de confinement et est conçue pour distribuer un liquide de lavage sur le véhicule.

6. Appareil selon la revendication 5, **caractérisé en ce qu'**il comprend des moyens (51-55, 57) conçus pour alimenter ladite autre pluralité de buses de lavage (33) et ladite pluralité de buses de lavage supplémentaire (35) en liquide de lavage à basse pression, de telle sorte que ladite autre pluralité de buses de lavage (33) et ladite pluralité de buses de lavage supplémentaire (35) sont conçues pour distribuer un liquide de lavage à basse pression sur le véhicule.

7. Appareil selon la revendication 6, **caractérisé en ce que** ladite pluralité de buses de lavage (34), ladite autre pluralité de buses de lavage (33) et ladite pluralité de buses de lavage supplémentaire (35) sont disposées en succession de bas en haut des parois latérales (22) de la structure de confinement du véhicule.

8. Appareil selon la revendication 1, **caractérisé en ce que** lesdits moyens de déplacement (36) sont conçus pour disposer ladite première pluralité de buses de lavage dans ladite première position (B) lorsque ladite seconde pluralité de buses de lavage est disposée dans ladite deuxième position (C) pendant le nettoyage du véhicule.

9. Appareil selon la revendication 8, **caractérisé en ce que** lesdits moyens de déplacement (36) sont conçus pour disposer ladite pluralité de buses de lavage dans une troisième position (A) à une hauteur à partir de la structure de base qui est inférieure à ladite première hauteur (H1) lorsque le nettoyage du véhicule est terminé.

10. Appareil selon la revendication 1, **caractérisé en ce qu'**il comprend des moyens de commande (71) conçus pour activer ladite première pluralité de buses de lavage et ladite seconde pluralité de buses de lavage en alternance lorsque ladite première pluralité de buses de lavage et ladite seconde pluralité de buses de lavage sont conçues pour distribuer un liquide de lavage à haute pression.
